(19) Europäisches Patentamt European Patent Office Office européen des brevets

(11) **EP 4 491 599 A1**

(12) **EUROPÄISCHE PATENTANMELDUNG**

(43) Veröffentlichungstag:
**15.01.2025 Patentblatt 2025/03**

(21) Anmeldenummer: 24188036.8

(22) Anmeldetag: **11.07.2024**

(51) Internationale Patentklassifikation (IPC):
*C04B 35/468* (2006.01) *C04B 35/626* (2006.01)
*C04B 35/634* (2006.01) *C04B 35/64* (2006.01)
*C04B 35/472* (2006.01)

(52) Gemeinsame Patentklassifikation (CPC):
**C04B 35/4684; C04B 35/472; C04B 35/6261;
C04B 35/6262; C04B 35/62655; C04B 35/62695;
C04B 35/6342; C04B 35/64;** C04B 2235/3208;
C04B 2235/3213; C04B 2235/3215;
C04B 2235/3224; C04B 2235/3225;
C04B 2235/3227; C04B 2235/3229; (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **14.07.2023 DE 102023118776**

(71) Anmelder: **Mahle International GmbH
70376 Stuttgart (DE)**

(72) Erfinder:
• **Angermann, Hans-Heinrich
70567 Stuttgart (DE)**
• **Wintrich, Klaus
63628 Bad Soden-Salmünster (DE)**
• **Seifert, Torben
79713 Bad Säckingen (DE)**

(54) **PTC-HALBLEITERKERAMIKZUSAMMENSETZUNG, VERFAHREN ZUR HERSTELLUNG DER HALBLEITERKERAMIK SOWIE HEIZVORRICHTUNG UND VERWENDUNG**

(57) Die Erfindung betrifft eine Halbleiterkeramikzusammensetzung, wobei die Halbleiterkeramikzusammensetzung eine BaTiOs-basierte Verbindung gemäß der folgenden Formel als Hauptkomponente aufweist

$$[Ba_bCa_cSr_sPb_pR_x][Ti_tA_aMn_m]O_{3+z} \,,$$

wobei R mindestens ein Element ausgewählt aus der Gruppe bestehend aus Y, La, Ce, Pr, Nd, Sm, Eu, Gd, Tb, Dy, Ho, Er, Tm, Yb darstellt
und wobei A mindestens ein Element ausgewählt aus der Gruppe V, Nb und Ta darstellt und wobei die Variablen b, c, s, p, x, t, a, m und z wie folgt definiert sind:

$$b = 1 - c - s - p - x$$

$$0 < c + s + p < 0{,}51$$

$$0{,}490 < b < 0{,}999$$

$$0{,}0 < c < 0{,}5$$

$$0{,}0 < s < 0{,}5$$

$$0{,}05 < p < 0{,}5$$

EP 4 491 599 A1

$$0{,}001 < x < 0{,}01$$

$$1{,}0001 < (t + a + m) < 1{,}011575$$

$$0{,}9889 < t < 1{,}000375$$

$$0{,}00010 < a < 0{,}0012$$

$$0{,}0001 < m < 0{,}01$$

$$0{,}0001 < z < 0{,}01,$$

sowie ein Verfahren zur Herstellung der entsprechenden PTC-Halbleiterkeramik, die Verwendung der PTC- Halbleiterkeramik sowie eine Heizvorrichtung, welche die PTC-Halbleiterkeramik aufweist.

Figur 2

(52) Gemeinsame Patentklassifikation (CPC): (Forts.)
C04B 2235/3239; C04B 2235/3251;
C04B 2235/3262; C04B 2235/3296;
C04B 2235/3418; C04B 2235/5436;
C04B 2235/5463; C04B 2235/608;
C04B 2235/768; C04B 2235/79

**Beschreibung**

Die Erfindung betrifft eine PTC-Halbleiterkeramikzusammensetzung, ein Verfahren zur Herstellung der entsprechenden PTC-Halbleiterkeramik, die Verwendung der PTC-Halbleiterkeramik sowie eine Heizvorrichtung, welche die PTC-Halbleiterkeramik aufweist, nach der Gattung der unabhängigen Patentansprüche.

Halbleiterkeramiken, deren elektrische Leitfähigkeit mit steigender Temperatur aufgrund eines steigenden Widerstandes abnimmt, zeigen eine thermische Selbstregulierung, welche bei der Anwendung als Heizelement genutzt werden kann. Dieser Effekt wird auch als PTC-Effekt (Positive Temperature Coefficient) bezeichnet. Da bei den bislang hauptsächlich genutzten Kraftfahrzeugen mit Verbrennungsmotor die im Motor entstehende Abwärme zum Heizen des Innenraums genutzt werden kann, wurden PTC-Heizelemente in der Vergangenheit lediglich als Zusatzheizung zur schnellen Erwärmung bzw. bei kalten Außentemperaturen genutzt. Solche Zusatzheizelemente sind in der Regel für Bordnetze im Niedervoltbereich (typischerweise mit Spannungen bis 48 Volt) ausgelegt. Beispielsweise betrifft die DE 10 2014 110 164 A1 eine Heizvorrichtung mit einem PTC-Heizwiderstand und ein Verfahren zum Herstellen eines Heizstabs, welche zum Beheizen eines Fahrgastinnenraums verwendet werden kann.

Bei Elektrofahrzeugen steht jedoch keine Abwärme eines Verbrennungsmotors zur Verfügung. Dennoch wird Wärme sowohl zur Temperierung des Fahrzeuginnenraums als auch zur Temperierung der Batterie benötigt. In Elektrofahrzeugen werden zudem deutlich höhere Bordnetzspannungen verwendet. Beispielsweise werden Bordnetzspannungen von nominell bis zu 350 Volt in Personenkraftwagen verwendet und mittelfristig werden Spannungen von nominell 800 Volt angestrebt (Hochvoltbereich). Dies beruht unter anderem darauf, dass eine erhöhte Batteriespannung die Batterieladezeit verkürzt bzw. die nutzbare Batterieaufzeit erhöht und auch die Leistungsdichte erhöht werden kann. In der Vergangenheit verwendete PTC-Bauteile können diese Spannungsanforderungen entweder nicht oder nur durch die Verwendung einer deutlich größeren Bauteildicke erreichen.

Es ist eine Aufgabe der vorliegenden Erfindung, bei der Entwicklung von PTC-Halbleiterkeramikzusammensetzungen für eine PTC-Halbleiterkeramik sowie dem entsprechenden Verfahren zur Herstellung der Keramik und einer entsprechenden Heizvorrichtung neue Wege aufzuzeigen, um deren thermische und/oder elektrische Eigenschaften zu verbessern.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Erfindungsgemäß ist vorgesehen, eine Halbleiterkeramikzusammensetzung bereit zu stellen, wobei die Halbleiterkeramikzusammensetzung eine BaTiOs-basierte Verbindung gemäß der folgenden Formel als Hauptkomponente aufweist $[Ba_bCa_cSr_sPb_pR_x][Ti_tA_aMn_m]O_{3+z}$ ,

wobei R mindestens ein Element ausgewählt aus der Gruppe bestehend aus Y, La, Ce, Pr, Nd, Sm, Eu, Gd, Tb, Dy, Ho, Er, Tm, Yb darstellt

und wobei A mindestens ein Element ausgewählt aus der Gruppe V, Nb und Ta darstellt und wobei die Variablen b, c, s, p, x, t, a, m und z wie folgt definiert sind:

$$b = 1 - c - s - p - x$$

$$0 < c + s + p < 0{,}51$$

$$0{,}490 < b < 0{,}999$$

$$0{,}0 < c < 0{,}5$$

$$0{,}0 < s < 0{,}5$$

$$0{,}05 < p < 0{,}5$$

$$0{,}001 < x < 0{,}01$$

$$1{,}0001 < (t + a + m) < 1{,}011575$$

EP 4 491 599 A1

$$0,9889 < t < 1,000375$$

$$0,00010 < a < 0,0012$$

$$0,0001 < m < 0,01$$

$$0,0001 < z < 0,01.$$

Die erfindungsgemäße Halbleiterkeramikzusammensetzung mit den Merkmalen des unabhängigen Patentanspruchs 1 hat gegenüber dem Stand der Technik den wesentlichen Vorteil, dass sie eine hohe Durchbruchspannung und eine gute Selbstregulierung aufweist und somit eine Anwendung in einem Heizelement für den Betrieb bei hohen Spannungen bis hin zum Hochvoltbereich ermöglicht. Gleichzeitig ist keine übermäßige Erhöhung der Bauteildicke notwendig.

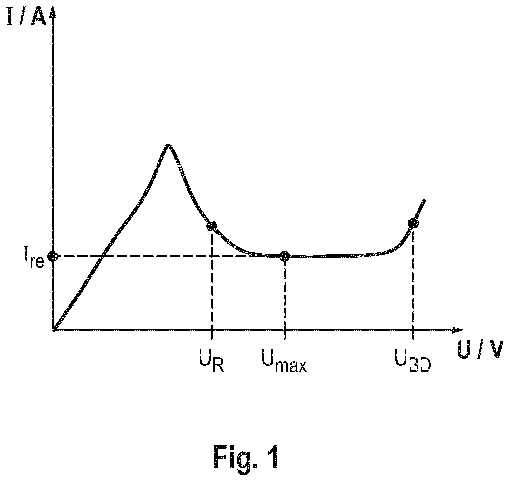

Unter der Durchbruchspannung einer PTC-Keramik wird im Rahmen der vorliegenden Erfindung die Spannung verstanden, bei der nach Erreichen eines konstanten Stroms im Regelbereich des Materials bei weiterer Spannungserhöhung über $U_{max}$ hinaus ein steiler Anstieg des Stroms zu beobachten ist, was zu irreversiblen Schäden an der Keramik führt. Dies ist in der Figur 1 schematisch dargestellt. Die PTC-Keramiken weisen gleichzeitig die Besonderheit auf, dass ihr Widerstand bei einer bestimmten Temperatur schlagartig ansteigt. Hierdurch wird eine Selbstregulierung ermöglicht, da ein steigender Strom auch zu einer höheren Temperatur führt, woraufhin der Widerstand des Materials ansteigt und der Stromfluss abnimmt. Die Durchbruchspannung kann sowohl durch die Materialdicke als auch durch die Materialzusammensetzung selbst beeinflusst werden. Hierauf wird später noch genauer eingegangen.

Ein weiterer wesentlicher Vorteil ist daher, dass ein Heizelement basierend auf der erfindungsgemäßen Halbleiterkeramikzusammensetzung direkt an der Bordspannung betrieben werden kann, auch wenn eine höhere Bordspannung verwendet wird. Hierdurch können Kosten und Fehlerquellen vermieden werden, da keine aufwendige Sicherungs- und Regelungstechnik, beispielsweise zur Umwandlung in einen niedrigeren Spannungsbereich, benötigt werden.

Zudem weist ein Heizelement basierend auf der erfindungsgemäßen Halbleiterkeramikzusammensetzung den wesentlichen Vorteil auf, dass für eine hohe Durchbruchspannung keine übermäßig größere Bauteildicke notwendig ist. Dadurch kann ein höheres Bauteilgewicht vermieden werden. Zudem kann auch ein größerer Luftwiderstand, bedingt durch eine größere Bauteildicke beispielsweise bei Verwendung in einem Heizgebläse mit dem zugehörigen Luftkanal vermieden werden. Des Weiteren können ein höhere Materialbedarf und die entsprechenden erhöhten Kosten und der erhöhte Energiebedarf bei der Herstellung vermieden werden. Weiterhin werden durch eine große Bauteildicke bedingte thermische Spannungen innerhalb des Materials und der hierdurch bedingte Verschleiß deutlich verringert.

Zudem ermöglicht die Verwendung eines Heizelements basierend auf der erfindungsgemäßen Halbleiterkeramikzusammensetzung eine optimale Temperierung der Batterie im Lade- und Fahrzustand. Alternativ kann das Heizelement aber auch vorteilhaft lediglich als Innenraumheizung verwendet werden, wobei aufgrund einer vorteilhaften Einsparung bezüglich des Gewichts und der Größe der Keramik eine geringere Luftleistung benötigt wird.

Daraus ergibt sich als weiterer wesentlicher Vorteil, dass die Lebensdauer der Batterie und die Reichweite der entsprechenden Fahrzeuge deutlich erhöht werden können.

Dies wird insbesondere dadurch erreicht, dass eine Halbleiterkeramikzusammensetzung angegeben wird, mit der höhere Durchbruchspannungen bei gleichzeitig guter Selbstregulierung erreicht werden können.

Nachfolgend werden die erfindungsgemäße Halbleiterkeramikzusammensetzung, das Verfahren zur Herstellung der PTC-Halbleiterkeramik bzw. des entsprechenden Sinterkörpers, die Verwendung der PTC-Halbleiterkeramik sowie eine Heizvorrichtung, welche die PTC-Halbleiterkeramik aufweist, genauer erläutert, wobei die im Rahmen der Erläuterung der erfindungsgemäßen Keramik und in diesem Zusammenhang verwendete Figuren ebenfalls sinngemäß für das Verfahren und die Verwendung und die in diese Zusammenhang verwendeten Figuren gelten und umgekehrt.

Die vorliegende Erfindung beruht auf dem allgemeinen Gedanken, eine Halbleiterkeramik bereit zu stellen, die einen steilen Anstieg ihres Widerstandes im Bereich ihrer Curie-Temperatur und eine hohe Durchbruchspannung aufweist und auch zur Verwendung in hohen Spannungsbereichen bis hin zum Hochvoltbereich geeignet ist, ohne, dass die Dicke der verwendeten Keramik übermäßig vergrößert werden muss. Da PTC-Bauteile normalerweise zudem einen Sicherheitsfaktor der Durchbruchspannung aufweisen sollen, wird die Durchbruchsspannung meist als ungefähr das Zweifache der Bordnetzspannung definiert. Bei einer Bordnetzspannung von 350 Volt wird somit eine Durchbruchsspannung von mindestens 650 Volt gefordert und bei einer Bordnetzspannung von 800 Volt gar 1400 Volt.

Typischerweise tritt der Effekt eines starken Widerstandsanstiegs solcher PTC-Keramiken im Bereich einer Phasenumwandlung auf. Bei einer Temperatur deutlich unter der Phasenumwandlung liegt ein typisches NTC (Negative Temperature Coefficient) -Halbleiterverhalten vor, der Widerstand sinkt also mit steigender Temperatur. Im Bereich nach dem starken Anstieg des Widerstands liegt ebenfalls ein typisches NTC-Halbleiterverhalten vor. Der spezielle Effekt eines starken PTC-Widerstandsanstiegs zwischen den beiden NTC-Bereichen und dadurch bei gegebener Spannung eine starke Stromreduzierung kann zur Selbstregulierung eines Heizelementes verwendet werden, da hierdurch verhindert wird, dass die Leistungsabgabe des Heizelements sich mit steigendem Strom immer weiter erhöht, bis es letztlich beispielsweise zu einem Brand kommt.

Der PTC-Effekt tritt beispielsweise bei Verbindungen auf Basis von BaTiOs auf und stellt einen Korngrenzeffekt, gekoppelt mit einer Phasenumwandlung dar. Reines BaTiOs weist einen Phasenübergang von einer tetragonalen in eine kubische Kristallstruktur bei etwa 120 °C, der sogenannten Curie-Temperatur, auf. Die kubische Kristallstruktur des BaTiOs ist ein typisches Beispiel für die ideale kubische Perowskit-Struktur. In dieser befindet sich das Titan-(IV)-Kation in der Mitte eines Oktaeders, dessen Ecken von Oxid-Ionen ausgebildet werden. Das Barium-(II)-Kation befindet sich hingegen in der Mitte eines aus Oxid-Ionen ausgebildeten Kubooktaeders. Bei Verbindungen mit anderer Zusammensetzung ist es auch denkbar, dass andere Kationen und Anionen mit von den hier erwähnten Ionenladungen verschiedenen Ladungen auftreten. In der tetragonalen Struktur findet eine Verzerrung statt, wobei unter anderem ein Abweichen von der idealen Oktaeder-Geometrie des Oktaeders um das Ti-(IV)-Kation beobachtet wird. Dadurch befindet sich das Titan-(IV)-Kationen nicht mehr genau in der Mitte des Oktaeders, die Ladungsschwerpunkte von Ti und O liegen nicht aufeinander und das BaTiOs ist in der tetragonal verzerrten Modifikation ein Ferroelektrikum (siehe unten). Dies ist in der kubischen Modifikation nicht mehr der Fall.

Reines BaTiOs weist eine Bandlücke von etwa 3 eV und somit eine geringe elektrische Leitfähigkeit auf. Typischerweise wird daher dotiertes BaTiOs verwendet. Unter Dotierung wird das Einbringen von Fremdatomen in ein Grundmaterial verstanden. Beispielsweise kann ein solches Fremdatom eine Anzahl an Valenzelektronen aufweisen, die von der Anzahl an Valenzelektronen des entsprechenden Elementes des Grundmaterials verschieden, ist. Üblicherweise wird BaTiOs mit Donator-Fremdatomen dotiert, das bedeutet, dass beispielsweise ein Atom mit drei Valenzelektronen auf einen Bariumplatz eingebracht wird, wohingegen ein Bariumatom selbst nur zwei Valenzelektronen aufweist. Es ist aber auch möglich, das Ti mit vier Valenzelektronen durch ein pentavalentes Element zu substituieren, was auch eine Donordotierung bedeutet. Durch Sintern bei hohen Sauerstoffpartialdrücken können gleichzeitig Barium- und Sauerstoff-Leerstellen gebildet werden, deren Konzentration an den Korngrenzen am höchsten ist. Unter einer Leerstelle wird in diesem Zusammenhang verstanden, dass der eigentlich für ein Element vorgesehener Platz in der Kristallstruktur an dieser Stelle leer bleibt. Liegt ein Material, wie beispielsweise in einer Keramik, in polykristalliner Form vor, so enthält das Material eine Vielzahl von Korngrenzen, die beispielsweise einzelne kristalline Bereiche mit unterschiedlicher Ausrichtung voneinander trennen. Die eingebrachten Leerstellen können nun als Akzeptoren dienen, da die Valenzelektronen des normalerweise an dieser Stelle vorhandenen Elements fehlen. In seiner tetragonalen Form, also unter Normaldruck unterhalb von 120°C, ist BaTiOs ein Ferroelektrikum, es kann also Bereiche mit gleicher Polarisationsrichtung ausbilden. Die hierdurch entstehenden Polarisationsladungen können die negativen Korngrenzenladungen aufgrund der vorstehend erwähnten Leerstellen kompensieren. Mit der Umwandlung in die kubische Kristallstruktur entfällt die ferroelektrische Eigenschaft. Die negativen Korngrenzenladungen können nun nicht mehr durch Polarisationsladungen kompensiert werden, sondern müssen stattdessen durch die durch Dotierung eingebrachten Donatoren kompensiert werden. Hierdurch steigt bei der Phasenumwandlungstemperatur zunächst schlagartig der Widerstand.

Die erfindungsgemäße Halbleiterkeramikzusammensetzung weist nun eine BaTiO$_3$-basierte Verbindung gemäß der folgenden Formel als Hauptkomponente auf:

$$[Ba_bCa_cSr_sPb_pR_x][Ti_tA_aMn_m]O_{3+z} .$$

Unter der Hauptkomponente wird hierbei die überwiegend vorhandene Verbindung verstanden. Es versteht sich von selbst, dass eine solche

Halbleiterkeramikzusammensetzung geringe Mengen an Verunreinigungen mit anderen Verbindungen aufweisen kann. Beispielsweise ist es denkbar, dass eine solche Halbleiterkeramikzusammensetzung geringe Mengen, insbesondere Mengen von jeweils kleiner als 0,5 Gew.-% bezogen auf die Gesamtzusammensetzung, an Verunreinigungen mit den Edukten, wie beispielsweise TiO$_2$ oder BaCOs enthalten kann. Zudem ist es denkbar, dass die Halbleiterkeramikzusammensetzung geringe Mengen an Sinterhilfsmittel, insbesondere jeweils kleiner als 5 Gew.-% bezogen auf die Gesamtzusammensetzung, an Sinterhilfsmitteln enthalten kann. Sinterhilfsmittel werden beispielsweise zugesetzt, um eine niedrigere Sintertemperatur zu erreichen.

In der Formel der Hauptkomponente der erfinderischen Halbleiterkeramikzusammensetzung stellt R mindestens ein Element ausgewählt aus der Gruppe bestehend aus Y, La, Ce, Pr, Nd, Sm, Eu, Gd, Tb, Dy, Ho, Er, Tm, Yb dar. A stellt mindestens ein Element ausgewählt aus der Gruppe V, Nb und Ta dar und die Variablen b, c, s, p, x, t, a, m und z sind wie folgt definiert:

$$b = 1 - c - s - p - x$$

$$0 < c + s + p < 0{,}51$$

$$0{,}490 < b < 0{,}999$$

$$0{,}0 < c < 0{,}5$$

$$0{,}0 < s < 0{,}5$$

$$0{,}05 < p < 0{,}5$$

$$0{,}001 < x < 0{,}01$$

$$1{,}0001 < (t + a + m) < 1{,}011575$$

$$0{,}9889 < t < 1{,}000375$$

$$0{,}00010 < a < 0{,}0012$$

$$0{,}0001 < m < 0{,}01$$

$$0{,}0001 < z < 0{,}01.$$

Es hat sich überraschenderweise gezeigt, dass durch die erfindungsgemäße Dotierung mit R und A, einer sogenannten Co-Dotierung mit R und A, die Durchspruchspannung erheblich erhöht werden kann. Ohne durch diese Erklärung festgelegt sein zu wollen, gehen die Erfinder davon aus, dass bei einer einfachen Dotierung lediglich mit R das trivalente Element R zwar durchaus hauptsächlich auf dem bivalenten Bariumplatz substituiert, jedoch substituiert es in geringem Maße auch auf dem tetravalenten Titanplatz. Hierdurch wird der angestrebte Donatoreffekt teilweise auf unerwünschte Weise kompensiert. Eine Zugabe des pentavalenten Elementes A wirkt jedoch diesem unerwünschten Effekt entgegen, da A ausschließlich auf dem Titanplatz eingebaut wird und hier als zusätzlicher Donator wirkt. Die Co-Dotierung führt daher zu einer erhöhten Steigung der Widerstands-Temperatur-Kennlinie (R(T)-Kennlinie) der PTC-Keramik und hierdurch auch zu einer Erhöhung des PTC-Sprungs und einer Steigerung der Durchbruchsspannung. Die Zugabe von Blei und/oder Strontium dient dazu, die Phasenumwandlungstemperatur und somit die Temperatur des PTC-Sprungs gezielt anzupassen. Reines SrTiOs beispielsweise kristallisiert unter Normalbedingungen in der kubischen Perowskit-Struktur. Im Falle von reinem PbTiOs dagegen findet die Umwandlung von der tetragonalen zur kubischen Kristallstruktur erst über ungefähr 475 °C statt. Ein leichter Überschuss an Titan kann zudem während des Herstellprozess zu der Bildung geringer Mengen an titanreicher Phasen führen, wie beispielsweise $Ba_6Ti_{17}O_{40}$. Diese Verbindungen dienen als Sinterhilfsmittel. Zudem führt der Titanüberschuss im Korngrenzenbereich vermehrt zur Bildung von Barium-Leerstellen, was wiederum zu einem großen PTC-Sprung führt. Die Zugabe von Mangan führt zudem zu Akzeptorniveaus an den Korngrenzen, welche sich besonders günstig auf die PTC-Eigenschaften auswirken, so dass eine steilere R(T)-Kennlinie und ein größerer temperaturabhängiger Widerstandssprung beobachtet werden.

Es hat sich zudem als vorteilhaft erwiesen, dass die

Halbleiterkeramikzusammensetzung weiterhin Siliziumdioxid enthält, bevorzugt enthält die Halbleiterkeramikzusammensetzung minimal ungefähr 0,01 Gew-% bis maximal ungefähr 5 Gew-% an Siliziumdioxid, bezogen auf die Masse der gesamten Halbleiterkeramikzusammensetzung, mehr bevorzugt enthält die Halbleiterkeramikzusammensetzung minimal ungefähr 0,1 Gew-% bis maximal ungefähr 1 Gew-% an Siliziumdioxid, bezogen auf die Masse der gesamten Halbleiterkeramikzusammensetzung.

Die Zugabe von Silizium, bevorzugt in Form von Siliziumdioxid führt zu einer niedrigeren Sintertemperatur während des Herstellungsprozesses, was unter anderem zu einer Energieersparnis führt. Der Vorteil von Siliziumdioxid im Gegensatz zu beispielsweise $Al_2O_3$ oder $ZrO_2$ als Sinterhilfsmittel ist, dass sich Silizium nicht negativ auf die elektrischen Eigenschaften des Produkts auswirkt. Des Weiteren hat es sich überraschenderweise herausgestellt, dass hierdurch die Durchbruchspannung vorteilhaft erhöht werden kann.

Bei einer vorteilhaften Weiterbildung der Halbleiterkeramikzusammensetzung stellt R mindestens ein Element ausgewählt aus der Gruppe bestehend aus Y, La, Ce, Pr, Nd, Sm, Gd, Tb, Dy, Ho und Er dar, bevorzugt stellt R mindestens ein Element ausgewählt aus der Gruppe bestehend aus Y und La dar, mehr bevorzugt steht R für das Element Y. Dies führt dazu, dass besonders gute PTC-Eigenschaften erreicht werden.

Bei einer weiteren vorteilhaften Weiterbildung der Halbleiterkeramikzusammensetzung steht A für das Element Nb. Hierdurch kann insbesondere ein günstiger Donatoreffekt erreicht werden.

Weiterhin hat es sich als vorteilhaft erwiesen, dass die Variablen t, a und m Werte im Bereich der folgenden Grenzen einnehmen:

$$0,9985 < t < 1,000075$$

$$0,0002 < a < 0,0006$$

$$0,0003 < m < 0,001.$$

Überraschenderweise hat sich gezeigt, dass mit dieser vorteilhaften Zusammensetzung ein besonders vorteilhafter PTC-Effekt verbunden ist.

Insbesondere hat es sich als vorteilhaft erwiesen, dass die Variablen b, c, s, p, x, t, a, m die folgenden Werte annehmen:

b = 0,627
c = 0,12
s = 0,03
p = 0,22
x = 0,003
t = 0,999625
a = 0,0003
m =0,00065.

Eine insbesondere vorteilhafte chemische Zusammensetzung kann somit die Stöchiometrieformel

$$[Ba_{0,627}Ca_{0,12}Sr_{0,03}Pb_{0,22}Y_{0,003}][Ti_{0,999625}Nb_{0,0003}Mn_{0,00065}]O_{3,00065}$$

aufweisen.

Die chemische Zusammensetzung kann durch chemische Analyseverfahren wie ICP-OES (Optische Emissionsspektrometrie mit induktiv gekoppeltem Plasma) bestimmt werden.

Die Erfindung betrifft zudem eine Halbleiterkeramik umfassend einen Sinterkörper mit einer Halbleiterkeramikzusammensetzung wie vorstehend erläutert.

Unter einem Sinterkörper versteht der Fachmann das Werkstück, beispielsweise eine Keramik, das während des Sinterns entsteht. Hierbei werden beispielsweise genau vorbereitete feinkörnige keramische Ausgangsstoffe erhitzt.

Die Erfindung betrifft zudem ein Verfahren zur Herstellung einer Halbleiterkeramik mit Sinterkörper mit einer Halbleiterkeramikzusammensetzung wie vorstehend erläutert umfassend die Schritte:

a) Rohstoffeinwaage
b) Mischmahlung
c) Trocknung und Vorgranulation
d) Kalzinierung
e) Feinmahlen
f) Sprühgranulieren
g) Pressen
h) Entbindern und Sintern.

In Schritt a) werden zunächst die Ausgangsstoffe bereitgestellt und in genau definierten Mengen abgewogen. Als Ausgangsmaterialien können beispielsweise Oxide, Carbonate und Sulfate wie $TiO_2$, $BaCOs$, $Pb_3O_4$, $Nb_2O_3$, $La_2O_3$, $MnCOs$ oder $MnSOa$ oder $Mn(CH_3COO)_2$ eingesetzt werden. Es hat sich als vorteilhaft erwiesen, dass die Ausgangsstoffe vor dem Abwiegen ausreichend getrocknet wurden, also in wasserfreier oder nahezu wasserfreier Form vorliegen, um Wägefehler zu vermeiden. Die Dotierelemente können zudem beispielsweise in Form der Chloride, Acetate oder Oxalate, wie beispielsweise $YCl_3$ oder $Y(CH_3COO)_3$ hinzugefügt werden. Hierbei wird eine Zugabe von Acetaten gegenüber einer Zugabe von Chloriden vorteilhafterweise bevorzugt, da das Acetat-Anion während der nachfolgenden Behandlung rückstandslos zu $CO_2$ und $H_2O$ umgesetzt wird, während Chlorid-Rückstände unter Umständen im Produkt verbleiben. Typischerweise erfolgt nach der Abwaage der Dotierelemente ein Dispergieren in deionisiertem Wasser, um anschließend eine homogene Verteilung der Dotierelemente im Endprodukt zu gewährleisten. Alternativ ist es auch denkbar, dass die Dotierelemente erst vor der Feinmahlung in Schritt e) hinzugegeben werden.

Anschließend findet in Schritt b) eine Mischmahlung statt. Hierbei werden die Ausgangsmaterialien unter Zusatz von deionisiertem Wasser und ggf. organischen Hilfsmitteln, wie beispielsweise Dispergiermittel und PVA (Polyvinalyacetat) oder PVB (Polyvinylbutyral) in Mühlen mit $ZrO_2$-Mahlkugeln auf eine ungefähr gleiche Partikelgröße gebracht und intensiv miteinander gemischt. Als Mühle können in diesem Zusammenhang beispielsweise Trommelmühlen, Korbmühlen oder Planetenkugelmühlen Anwendung finden. Beispielsweise ist es denkbar, dass ein Vermahlen in einer Planetenkugelmühle für 4 h bei 200 Umdrehungen pro Minute und $ZrO_2$-Mahlkugeln mit einem Durchmesser von 2 mm stattfindet.

Bei der Auswahl und Einwaage der Ausgangsmaterialien sowie der verwendeten Tiegelmaterialien und Mahlwerkzeuge ist zudem zu beachten, dass insbesondere Verunreinigungen mit Eisen einen nachteiligen Effekt auf die gewünschten elektrischen Eigenschaften des PTC-Materials haben. Es ist daher bevorzugt, dass eventuelle Mengen an Eisenverunreinigungen kleiner als 100 ppm und insbesondere kleiner als 10 ppm sind. Sinngemäß gilt dies auch für Verunreinigungen mit Alkalimetallelementen. Beispielsweise hat es sich als vorteilhaft erwiesen, dass das $TiO_2$-Ausgangsmaterial maximal die folgenden Verunreinigungen aufweist: K max. 20 ppm, Mg max. 10 ppm, Al max. 20 ppm, Fe max. 10 ppm, Cl max. 100 ppm, Na max. 20 ppm, Nb max. 100 ppm, Zr max. 300 ppm, P max. 100 ppm, S max. 100 ppm , Sb, Ca, V, Co, Ni, Bi, Zn, Cu, B, Cr jeweils max. 10ppm . Zur Vermeidung von Verunreinigungen ist es auch denkbar, Kunststoffbeschichtungen dort einzusetzen, wo metallische Körper mit den verwendeten Pulvern und Presskörpern in direktem Kontakt stehen, wie beispielsweise in Mahlbehältern. Zudem ist es ebenfalls denkbar, besonders abriebfeste Materialien, wie beispielsweise Wolframcarbid oder lokal gehärtete Materialien, beispielsweise in Mahlbehältern oder Presswerkzeugen, zu verwenden.

Anschließend wird in Schritt c) die in Schritt b) erhaltene Mischung getrocknet. Grundsätzlich sind sämtliche dem Fachmann bekannten Methoden zur Trocknung, wie beispielsweise mit einer Filterpresse und eine Trocknung im Trockenschrank, denkbar. Hierbei erfolgt typischerweise ein Durchpressen der Flüssigkeit durch ein Filterpapier und ein anschließendes Trocknen des erhaltenen Filterrückstandes. Beispielsweise kann ein Trocknen im Trockenschrank für ungefähr 14 h bei ungefähr 200 °C erfolgen. Es hat sich jedoch als besonders vorteilhaft erwiesen, eine Sprühtrocknung in dem Fachmann bekannten Sprühtrocknern durchzuführen. Bezüglich der Sprühtrocknung gilt beispielsweise das weiter unten im Zusammenhang mit Schritt f) genauer Erläuterte. Ein Vorteil hieraus ist, dass das so entstandene Vorgranulat sich leichter weiterverarbeiten lässt. Es ist denkbar, dass von dem erhaltenen Vorgranulat ein Grobkornanteil mittels einer Siebung (300 $\mu$m Obergrenze) abgetrennt wird.

Nach der Trocknung in Schritt c) erfolgt in Schritt d) eine Temperaturbehandlung zum Kalzinieren. Das in Schritt c) erhaltene Pulver wird beispielsweise in eine Kalzinationskapsel gegeben und anschließend bei Temperaturen zwischen 900 und 1200 °C an Luft für eine Zeit zwischen minimal ungefähr 0,5 h und maximal ungefähr 4 h kalziniert. Typische Kalzinierungsparameter sind beispielsweise 1050 °C für 2 h. Während der Kalzinierung werden die Rohpulver thermisch zersetzt und es bildet sich $BaTiOs$ als Vorprodukt aus.

Es ist denkbar, die Kalzinierung in einem Kammerofen im Batchbetrieb oder in einem kontinuierlichem Durchstoßofen mit keramischen Kapseln oder in einem Drehrohrofen durchzuführen.

Um Verunreinigungen des Produkts zu vermeiden, kommen weiterhin als Ofenrohre bevorzugt hochtemperaturstabile Stähle zum Einsatz, wie beispielsweise Alloy 600 oder Alloy 602. Als keramische Kapseln können beispielsweise Yttrium-stabilisierte Zirkonoxidkapseln oder Cordierit zum Einsatz kommen.

Nach dem Kalzinieren in Schritt d) erfolgt in Schritt e) ein Feinmahlen. Diese erfolgt typischerweise in einer Kugelmühle. Das Feinmahlen wird vorteilhaft in deionisiertem Wasser mit organischen Hilfsmitteln, wie beispielsweise Dispergiermittel, Entschäumern und polymeren Bindern und PVA (Polyvinalyacetat ) oder PVB (Polyvinylbutyral ) ausgeführt. Beispielsweise ist es denkbar, dass die Feinmahlung in einer Planetenkugelmühle für 6 h bei 200 Umdrehungen pro Minute und $ZrO_2$-Mahlkugeln mit einem Durchmesser von 2 mm stattfindet. Zu der Feinmahlung werden entweder sofort bei Beginn der Feinmahlung oder alternativ in den letzten 15 Minuten der Feinmahlung ein oder mehrere organische Pressbinder zugeführt. Beispiele für solche Pressbinder sind Polyethylengklykol, Polyvinylacetat oder Methylcellulose. Alternativ können die organischen Hilfsmittel auch für einem separaten Nachmahlschritt hinzugefügt werden.

Die Feinmahlung ist zwingend für die darauffolgende Sprühgranulierung erforderlich.

Üblicherweise werden durch die Feinmahlung Partikelgrößen $d_{90}$ von ungefähr < 10 $\mu$m und $d_{50}$ von ungefähr < 3 $\mu$m, bevorzugt einem $d_{50}$ von ungefähr < 2 $\mu$m erhalten.

Es wird vorteilhafterweise aber angestrebt, dass bis zu Partikelgrößen $d_{50}$ von $\leq$ 1 $\mu$m gemahlen wird, um beim Sintern kleinere Korngrößen zu erzielen, was sich zu einer Erhöhung der Durchbruchspannung führt.

Der Durchmesserwert $d_{50}$ gibt den Partikeldurchmesser an, unterhalb dessen 50 % aller Partikel zu finden sind. Im Umkehrschluss bedeutet dies auch, dass 50% aller Partikel einen größeren Partikeldurchmesser aufweisen. Entsprechend gibt der Durchmesserwert $d_{90}$ den Partikeldurchmesser an, unterhalb dessen 90 % aller Partikel zu finden sind. Es versteht sich von selbst, dass solche Partikel eine von der idealen Kugel geringfügig abweichende Geometrie aufweisen können. Typischerweise werden solche Partikeldurchmesser mit Hilfe von Laserbeugung oder automatisierter statistischer Bildgebung bestimmt.

Hieran schließt sich in Schritt f) eine Sprühgranulierung bzw. Sprühtrocknung an. Grundsätzlich kann eine Sprühtrocknung in sämtlichen dem Fachmann bekannten Sprühtrocknern durchgeführt werden. Beispielsweise kann die Suspension/Dispersion dem Sprühtrockner mittels Pumpe zugeführt werden. Anschließend kann dann eine Düseneinspritzung von Trockenluft und Dispersion/Suspension im Gegen- oder Gleichstromprinzip erfolgen. Parameter für die Sprühtrocknung können hier beispielsweise minimal ungefähr 170 °C bis maximal ungefähr 220 °C Zulufttemperatur, minimal ungefähr 80°C und maximal ungefähr 110 °C für die Ablufttemperatur so wie ein geringer Unterdruck von etwa 0,6 kPa sein. Alternativ kann das Einspritzen auch im Rotationssprühtrockner über eine sich drehende Zerstäuberdüse (typischerweise 20.000 rpm) erfolgen. Der Vorteil hierbei ist, dass durch die zusätzliche Fliehkraft eine Teilchenform erhalten wird, welche näher an einer idealen Kugelform ist.

Eine Sprühtrocknung führt vorliegend typischerweise zu einer Granulatfeuchte von ungefähr < 15% und zu Granulatgrößen ($d_{50}$) von ungefähr kleiner 100 $\mu$m, was besonders vorteilhaft ist für die Homogenität, das Einführen in das Presswerkzeug und die Verpressbarkeit. Insbesondere hat sich überraschenderweise herausgestellt, dass dies auch zu einer Erhöhung der Durchbruchspannung führt.

Es hat sich des Weiteren als vorteilhaft erwiesen, zur Vermeidung oder Minimierung von kritischen Metallverunreinigungen im Herstellprozess Magnetfilter einzusetzen.

Anschließend erfolgt in Schritt g) ein Verpressen des Granulats. Grundsätzlich ist ein Verpressen in sämtlichen dem Fachmann bekannten Pressen möglich. Beispielsweise kann ein Trockenpressen mit einer mechanischen Linearpresse mit Ober- und Unterstempel erfolgen, wobei typischerweise bei einem Einzelteil mit einer für eine Heizanwendung optimierten Geometrie ein Druck von etwa 6,6 kN verwendet wird. Die typische Pressdichte liegt hierbei bei ungefähr 3,2 bis 3,3 g/cm$^3$. Alternativ ist beispielsweise auch ein Verpressen in einer Rotationspresse denkbar.

Anschließend an Schritt g) erfolgt in Schritt h) ein Entbindern und Sintern des erhaltenen Presslings. Dies kann in zwei getrennten Öfen oder in einem Ofen erfolgen. Bevorzugt erfolgten das Entbindern und Sintern in einem Ofen. Hierbei kann es sich bei dem Ofen um einen Sinterofen mit mehreren Abschnitten handeln, wobei Entbinderzonen mit hoher Luftdurchflussrate, Sinterzonen und Abkühlzonen vorhanden sein können. Beispielsweise ist es denkbar, den Pressling zunächst für 2 bis 4 Stunden bei 150 bis 400 °C abhängig von dem verwendeten Pressbinder vorzubehandeln bis sämtliche organische Rückstände entfernt wurden. Hierbei hat sich ein langsames Aufheizen und dadurch bedingt ein Vermeiden von Rissbildung als vorteilhaft für das Erreichen einer optimalen Durchbruchspannung erwiesen. Der erhaltene Grünling wird anschließend beispielsweise in die Sinterzone des Ofens verbracht. Das Sintern erfolgt typischerweise an Luft bei Temperaturen von minimal ungefähr 1200 bis maximal ungefähr 1400 °C mit Haltezeiten zwischen ungefähr 0,5 und 4 h. Typische Sinterparameter sind beispielsweise ungefähr 1300 °C für ungefähr 1 h. Anschließend erfolgt ein Abkühlen auf Raumtemperatur. Beispielsweise kann das Abkühlen mit einer Abkühlrate von minimal ungefähr 2 K/min bis maximal ungefähr 10 K/min erfolgen.

Anschließend an das Sintern erfolgt typischerweise am abgekühlten Sinterkörper ein Schleifen auf die geforderte Geometrie. Durch das Schleifen wird die Sinterhaut entfernt, wodurch eine homogenere Struktur und bessere elektrische Eigenschaften erzielt werden. Das Schleifen muss schonend erfolgen, um keine Mikrorisse einzubringen und die Durchbruchspannung zu reduzieren.

Weiterhin betrifft die Erfindung einen PTC-Thermistor, welcher einen Sinterkörper aufweist, wobei der Sinterkörper eine Halbleiterkeramikzusammensetzung wie vorstehend erläutert aufweist, sowie Elektroden auf der Oberfläche des Sinterkörpers.

Unter einem Thermistor versteht der Fachmann einen variablen und wärmeempfindlichen elektrischen Widerstand mit einer Temperaturcharakteristik, die eine Nichtlinearität aufweist und deren Wert sich mit der Temperatur reproduzierbar ändert. Vorliegend weist der Sinterkörper, welche die Halbleiterkeramikzusammensetzung wie vorstehend erläutert aufweist, an zwei sich gegenüberliegenden Flächen eine Metallisierung auf. Diese dient der elektrischen Kontaktierung.

Grundsätzlich sind sämtliche dem Fachmann bekannten Metallisierungsschichten, die der elektrischen Kontaktierung auf der Oberfläche des Sinterkörpers dienen können, denkbar. Als besonders vorteilhaft hat es sich erwiesen, wenn die Metallisierung eine Cr-Schicht mit einer Dicke von ungefähr 0,1 $\mu$m auf dem Sinterkörper und eine weitere sich auf der Cr-Schicht befindlichen Schicht bestehend aus Nickel oder einer Nickellegierung mit einer Dicke von ungefähr 0,4

**EP 4 491 599 A1**

μm aufweist. Des Weiteren hat es sich als vorteilhaft erwiesen, wenn die Metallisierung zusätzlich eine Schicht, welche als Hauptbestandteil Ag aufweist und sich auf der Schicht bestehend aus Nickel oder einer Nickellegierung befindet, mit einer Dicke von ungefähr 7 μm aufweist. Vorteilhafterweise erfolgt das Aufbringen der Cr- und der Schicht bestehend aus Nickel oder einer Nickellegierung mittels einem PVD-Verfahren. Des Weiteren erfolgt das Aufbringen der Schicht, welche als Hauptbestandteil Ag aufweist, vorteilhaft mittels Siebdruck und anschließendem Einbrennen.

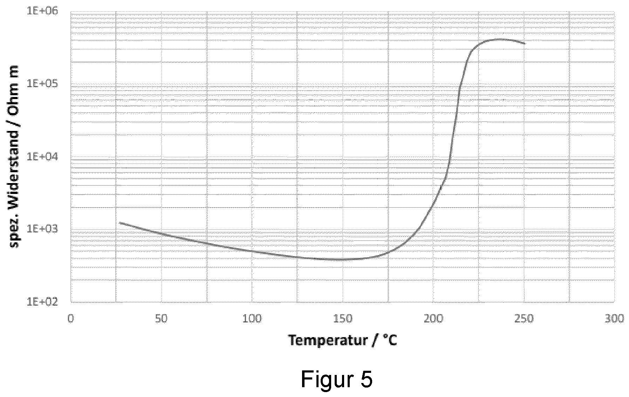

Selbstverständlich kann die Dicke und Form der PTC-Halbleiterkeramik abhängig von der gewünschten Anwendung gewählt werden. Beispielsweise hat es sich als vorteilhaft erwiesen, für die Verwendung in einem Heizer eine Dicke von ungefähr 2 mm für eine Betriebsspannung von ungefähr 350 V und eine Dicke von beispielsweise ungefähr maximal 2,8 mm bis minimal ungefähr 2,5 mm für eine Betriebsspannung von 800 V zu verwenden, bevorzugt findet bei einer Betriebsspannung von ungefähr 800 V eine Dicke von ungefähr 2,5 mm Anwendung. Eine PTC-Halbleiterkeramik wie vorstehend beschrieben hat typischerweise einen p(T)- Verlauf im Kleinsignalbereiche (sogenannte Messung bei Kleinspannung) $\leq$ 1,5 V wie in Fig. 5 gezeigt.

Zudem betrifft die Erfindung die Verwendung einer Halbleiterkeramik mit der Halbleiterkeramikzusammensetzung wie vorstehend erläutert in einer Hochvoltheizanwendung, einem Schaltelement, einem Messelement oder einem Temperaturregelelement, bevorzugt wird die Halbleiterkeramik in einer Hochvoltheizanwendung verwendet.

Als Hochvoltanwendung ist in diesem Zusammenhang insbesondere die Anwendung als PTC-Heizelement für ein Fahrzeug mit hoher Bordspannung von mindestens ungefähr 350 V und bevorzugt $\geq$ 800 V zu nennen.

Des Weiteren ist eine Anwendung als Überspannungsschutz, als Schalter mit Möglichkeit der Verzögerung, als Übertemperaturschutz oder Einschaltstrombegrenzer denkbar.

Weitere wichtige Merkmale und Vorteile der Erfindung ergeben sich aus den Unteransprüchen, aus den Zeichnungen und der dazugehörigen Figurenbeschreibung sowie dem Beispiel.

Es versteht sich von selbst, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Fig. 1: Schematische allgemeine Darstellung der Spannungs-Stromstärke-Kennlinie eines PTC-Bauteils.
Fig. 2: Schematische Darstellung eines Beispiels einer Halbleiterkeramik mit Metallisierung auf zwei sich gegenüberliegenden Seiten.
Fig. 3: Schematische Darstellung des erfinderischen Verfahrens zur Herstellung einer Halbleiterkeramik.
Fig. 4: Schematische Darstellung eines Hochvolt-Luftheizers
Fig. 5: Typischer Verlauf des spezifischen elektrischen Widerstands $\rho$ mit der Temperatur T für die erfindungsgemäße PTC-Keramik.

Die Figur 1 zeigt eine schematische Darstellung einer typischen Spannungs-Stromstärke-Kennlinie eines PCT-Bauteils. Hierbei stellt $U_R$ die nominelle Spannung dar, beispielsweise 350 V oder 800 V, für die die PCT-Keramik ausgelegt ist. $U_{max}$ ist die maximale Spannung, die dann anliegt, wenn die Batterie vollgeladen ist. $I_{re}$ steht für den entsprechenden maximalen Strom, der dann fließt, wenn $U_{max}$ anliegt. $U_{BD}$ steht für die Durchbruchsspannung.

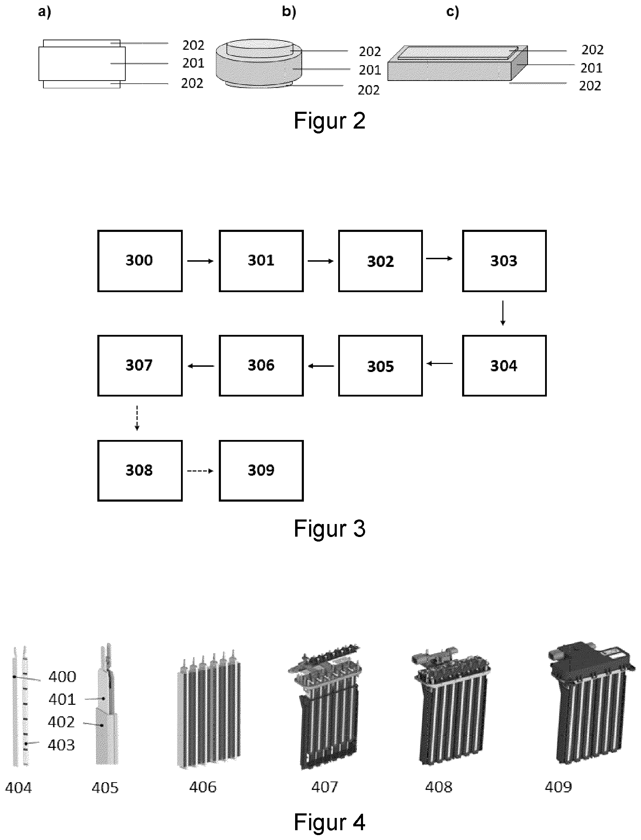

Die Figur 2 a) zeigt beispielhaft eine PTC-Halbleiterkeramik mit einem Sinterkörper 201 gemäß einer in der vorliegenden Anmeldung vorgeschlagenen Halbleiterkeramikzusammensetzung. Die Halbleiterkeramik 201 ist hierbei auf zwei gegenüberliegenden mit einer Metallschicht 202 beschichtet, welche zur elektrischen Kontaktierung dienen kann. Wie aus den Figuren Fig. 1 b) und Fig. 1 c) entnommen werden kann, ist es hierbei sowohl denkbar, dass es sich um eine zylinderförmige Anordnung (Tablette) handelt, ebenso ist es denkbar, dass die Anordnung kastenförmig (Quader) ausgestaltet ist. In diesem Zusammenhang ist zu beachten, dass auch in Fig. 2c eine Metallschicht auf den zwei gegenüberliegenden Seiten vorliegt, wobei eine Seite in der perspektivischen Darstellung nicht gezeigt wird. Vorteilhafterweise findet eine Quaderform Anwendung.

Die Figur 3 zeigt in Verfahrensschritt a) zunächst eine Rohstoffeinwaage 300. Es ist denkbar, dass alle eingewogenen Ausgangsstoffe im anschließenden Schritt b) zusammengegeben werden. Alternativ ist jedoch denkbar, dass beispielsweise die Dotiertelemente und/oder $SiO_2$ erst in Schritt e) hinzugegeben werden. In Schritt b) erfolgt eine Mischmahlung 301. Anschließend erfolgt in Schritt c) eine Trocknung und Vorgranulation 302. In Schritt d) erfolgt eine Kalzinierung 303 des zuvor erhaltenen Granulats. Hieran schließt sich in Schritt e) ein Feinmahlen 304 an. Für den Fall, dass nicht bereits alle eingewogenen Ausgangsstoffe in Schritt b) zugegeben wurden, werden die restlichen Ausgangsstoffe nun in Schritt e) zugegeben. Nach der Feinmahlung 304 liegen bevorzugt Partikelgrößen $d_{90}$ von ungefähr < 10 μm und $d_{50}$ von ungefähr < 3 μm, bevorzugt einem $d_{50}$ von ungefähr < 2 μm vor. Insbesondere bevorzugt sind Partikelgrößen $d_{50}$ von $\leq$ 1 μm. Hieran schließt sich in Schritt f) das Sprühgranulieren 305 an. Bevorzugt führt dies zu einer Granulatfeuchte von ungefähr < 15% und zu Granulatgrößen ($d_{50}$) von ungefähr kleiner 100 μm. In Schritt g) erfolgt dann ein Verpressen 306, gefolgt von einem Entbindern und Sintern 307 in Schritt h).

Für sämtliche Verfahrensschritte a) bis h) gilt, sofern nichts Gegenteiliges beschrieben ist, das bereits vorstehend im Zusammenhang mit den Verfahrensschritten Gesagte.

Optional ist es in einem weiteren Schritt denkbar, dass der erhaltene und abgekühlte Sinterkörper auf die für die gewünschte Anwendung erforderliche Form geschliffen wird, 308. Des Weiteren kann optional nach dem Schleifen eine Metallisierung 309 erfolgen, d.h. es werden auf zwei gegenüberliegenden Seiten des Sinterkörpers Metallschichten aufgebracht, welche eine elektrische Kontaktierung ermöglichen.

Die Figur 4 zeigt schematisch den Aufbau eines Hochvolt-Luftheizers. Hierbei ist ein PTC-Heizelement 403 durch eine Al-Kontaktfolie 400 kontaktiert. Diese beiden Elemente werden wiederum durch eine $Al_2O_3$-Isolierung 401 isoliert und befinden sich in einem Al-Rohr 402 in Form eines verklebten PTC-Heizelements 405 mit Kontaktierung und Isolierung. Sechs solcher Module sind wiederum miteinander elektrisch verbunden 406 und können in ein Gehäuse 407 eingebaut werden. Zusammen mit einer Steuerung und einem Anschluss ergibt sich das Element 408. Dieses wiederum wird mit einer Abdeckung für die Steuerungseinheit ausgestattet und ergibt den gebrauchsfertigen elektrischen PTC-Heizer 409.

Die Figur 5 zeigt einen typischer Verlauf des spezifischen elektrischen Widerstands $\rho$ mit der Temperatur ($\rho$(T)-Kurve) der erfindungsgemäßen PTC-Keramik. Die Geometrie der PTC-Keramik ist herausgerechnet. Hierbei ist im Bereich der Phasenumwandlung wie zuvor beschrieben ein starker Anstieg des spezifischen Widerstands zu erkennen.

Im Folgenden wird die Erfindung im Detail anhand eines Beispiels beschrieben, ohne den Umfang der Erfindung hierauf zu beschränken:

Verwendete Materialien:

$$BaCOs, CaCOs, SrCOs, Nb_2O_5, Y_2O_3, PbO_2, TiO_2, Mn(CH_3COO)_2, SiO_2$$

**Erfinderisches Beispiel IE1**

Es wird eine Halbleiterkeramik mit der folgenden
Halbleiterkeramikzusammensetzung hergestellt.

$$[Ba_bCa_cSr_sPb_pR_x][Ti_tA_aMn_m]O_{3+z}.$$

mit

R: Y
A: Nb
b: 0,627
c: 0,12
s: 0,03
p: 0,22
x: 0,003
t: 0,999625
a: 0,0003
m: 0,00065
z: 0,00065
und 0,3 Gew-% $SiO_2$.

Durchführung:

Zunächst wurden die Ausgangsstoffe $BaCOs$, $CaCOs$, $SrCOs$, $Nb_2O_5$, $Y_2O_3$, $PbO_2$, $TiO_2$ eingewogen. Anschließend erfolgte ein Mischmahlen in einer Suspension aus deionisiertem Wasser für 4h in einer Planetenkugelmühle (200 U/min; Mahlkugeln: $ZrO2$, fÖ 2 mm). Dann wurde das Pulver gemörsert und gesiebt, in einem Trockenschrank bei einer Temperatur von 120°C für 14h getrocknet und für 2h bei 1000°C kalziniert.

Anschließend hieran erfolgte eine Zugabe des $Mn(CH_3COO)_2$. Zudem wurde $SiO_2$ mit einem Anteil von 0,3 Gew.-%, bezogen auf die Gesamtzusammensetzung, zugegeben. Dann erfolgte die Feinmahlung dieser Mischung in einer Planetenkugelmühle (Dauer: 6h; 200 Umdrehungen/min, Mahlkugeln: $ZrO_2$, fÖ 2 mm). Anders als bei der Mischmahlung erfolgte hier die Mahlung in einer Suspension mit Isopropanol. Weiterhin erfolgte beim Feinmahlen auch die Zugabe eines Binders (PVB) zur Suspension. Das anschließende Sprühtrocknen erfolgte mit einer Gaseintrittstemperatur von 170°C und einer Gasaustrittstemperatur von 85°C. Nach dem Sprühgranulieren lag der $d_{90}$ des Granulates bei

$74\mu$m und die Schüttdichte bei 1,28 g/cm$^3$.

Das Verpressen des erhaltenen Granulats erfolgte durch uniaxiales Pressen zu Gründichten von ca. 3,4 g/cm$^3$. Die Sinterung erfolgte bei T=1300°C und einer Haltezeit von 1h mittels Sinterhilfsmitteln aus Zirkonoxid.

Anschließend wurde die Sinterhaut der erhaltenen Rohlinge weggeschliffen und diese mittels deionisiertem Wasser und Isopropanol gereinigt. Zur Kontaktierung wurde auf die Stirnflächen der geschliffenen Sinterkörper mit einer Al-Paste jeweils eine Schicht (Dicke: ca. 10 $\mu$m) aufgetragen. Diese wurde jeweils bei einer Temperatur von 150°C für 15 min getrocknet und anschließend bei einer Temperatur von 720°C und einer Haltezeit von 15 min eingebrannt.

Die mit Al kontaktierten Teile wurden danach elektrisch vermessen, d.h. es wurde eine p-T- Kurve der Teile gemessen (siehe Figur 5).

**Bezugzeichenliste**

$I_{re}$: maximaler Strom (bei $U_{max}$)
$U_R$: nominelle Spannung
$U_{max}$: maximale Spannung
$U_{BD}$: Durchbruchspannung
201: Halbleiterkeramik
202: Beschichtung mit Elektroden
300: Rohstoffeinwaage
301: Mischmahlung
302: Trocknung und Vorgranulation
303: Kalzinierung
304: Feinmahlen
305: Sprühgranulieren
306: Pressen
307: Entbindern und Sintern
308: Schleifen
309: Metallisieren
400: Al-Kontaktfolie
401: $Al_2O_3$ Isolierung
402: Al-Rohr
403: PTC-Heizelement,
404: Verklebtes PTC-Heizelement mit Kontaktierung und Isolierung
405: eingekapseltes verklebtes Heizelement
406: sechs verklebte und elektrisch verbundene Module des zuvor gezeigten Elements 405
407: Module in einem Gehäuse
408: Module in einem Gehäuse mit Steuerung und Anschluss
409: Module wie unter 408 gezeigt mit Steuerungsabdeckung; gebrauchsfertiger elektrischer PTC-Heizer

**Patentansprüche**

1. Halbleiterkeramikzusammensetzung, wobei die Halbleiterkeramikzusammensetzung eine BaTiOs-basierte Verbindung gemäß der folgenden Formel als Hauptkomponente aufweist

$$[Ba_bCa_cSr_sPb_pR_x][Ti_tA_aMn_m]O_{3+z},$$

wobei R mindestens ein Element ausgewählt aus der Gruppe bestehend aus Y, La, Ce, Pr, Nd, Sm, Eu, Gd, Tb, Dy, Ho, Er, Tm, Yb darstellt
und wobei A mindestens ein Element ausgewählt aus der Gruppe V, Nb und Ta darstellt und wobei die Variablen b, c, s, p, x, t, a, m und z wie folgt definiert sind:

$$b = 1 - c - s - p - x$$

$$0 < c + s + p < 0,51$$

$$0,490 < b < 0,999$$

$$0,0 < c < 0,5$$

$$0,0 < s < 0,5$$

$$0,05 < p < 0,5$$

$$0,001 < x < 0,01$$

$$1,0001 < (t + a + m) < 1,011575$$

$$0,9889 < t < 1,000375$$

$$0,00010 < a < 0,0012$$

$$0,0001 < m < 0,01$$

$$0,0001 < z < 0,01.$$

2.  Halbleiterkeramikzusammensetzung nach Anspruch 1, **dadurch gekennzeichnet, dass** die Halbleiterkeramikzusammensetzung weiterhin Siliziumdioxid enthält, bevorzugt enthält die Halbleiterkeramikzusammensetzung minimal ungefähr 0,01 Gew-% bis maximal ungefähr 5 Gew-% an Siliziumdioxid, bezogen auf die Masse der gesamten Halbleiterkeramikzusammensetzung,
    mehr bevorzugt enthält die Halbleiterkeramikzusammensetzung minimal ungefähr 0,1 Gew-% bis maximal ungefähr 1 Gew-% an Siliziumdioxid, bezogen auf die Masse der gesamten Halbleiterkeramikzusammensetzung.

3.  Halbleiterkeramikzusammensetzung gemäß einem der Ansprüche 1 und 2, **dadurch gekennzeichnet, dass** R mindestens ein Element ausgewählt aus der Gruppe bestehend aus Y, La, Ce, Pr, Nd, Sm, Gd, Tb, Dy, Ho und Er darstellt, bevorzugt stellt R mindestens ein Element ausgewählt aus der Gruppe bestehend aus Y und La dar, mehr bevorzugt steht R für das Element Y.

4.  Halbleiterkeramikzusammensetzung gemäß einem der vorstehenden Ansprüche, **dadurch gekennzeichnet, dass** A für das Element Nb steht.

5.  Halbleiterkeramikzusammensetzung gemäß einem der vorstehenden Ansprüche, **dadurch gekennzeichnet, dass** die Variablen t, a und m Werte im Bereich der folgenden Grenzen einnehmen:

$$0,9985 < t < 1,000075$$

$$0,0002 < a < 0,0006$$

$$0,0003 < m < 0,001.$$

6.  Halbleiterkeramikzusammensetzung gemäß einem der vorstehenden Ansprüche, **dadurch gekennzeichnet, dass** die Variablen b, c, s, p, x, t, a, m die folgenden Werte annehmen:

b = 0,627
c = 0,12
s = 0,03
p = 0,22
x = 0,003
t = 0,999625
a = 0,0003
m = 0,00065.

7.  Halbleiterkeramik umfassend einen Sinterkörper mit der Halbleiterkeramikzusammensetzung gemäß einem der vorstehenden Ansprüche.

8.  Verfahren zur Herstellung einer Halbleiterkeramik mit Sinterkörper mit der Halbleiterkeramikzusammensetzung gemäß einem der Ansprüche 1 bis 6 umfassend die Schritte:

a) Rohstoffeinwaage
b) Mischmahlung
c) Trocknung und Vorgranulation
d) Kalzinierung
e) Feinmahlen
f) Sprühgranulieren
g) Pressen
h) Entbindern und Sintern.

9.  PTC-Thermistor enthaltend:

- einen Sinterkörper mit der Halbleiterkeramikzusammensetzung gemäß einem der Ansprüche 1 bis 6, sowie
- Elektroden auf der Oberfläche des Sinterkörpers

10. Verwendung einer Halbleiterkeramik mit der Halbleiterkeramikzusammensetzung gemäß einem der Ansprüche 1 bis 6 in einer Hochvoltheizanwendung, einem Schaltelement, einem Messelement oder einem Temperaturregelelement, bevorzugt wird die Halbleiterkeramik in einer Hochvoltheizanwendung verwendet.

**Fig. 1**

a)

202
201
202

b)

202
201
202

c)

202
201
202

## Figur 2

```
┌─────────┐    ┌─────────┐    ┌─────────┐    ┌─────────┐
│   300   │ →  │   301   │ →  │   302   │ →  │   303   │
└─────────┘    └─────────┘    └─────────┘    └─────────┘
                                                  │
                                                  ↓
┌─────────┐    ┌─────────┐    ┌─────────┐    ┌─────────┐
│   307   │ ←  │   306   │ ←  │   305   │ ←  │   304   │
└─────────┘    └─────────┘    └─────────┘    └─────────┘
     ┊
     ↓
┌─────────┐    ┌─────────┐
│   308   │┄┄→ │   309   │
└─────────┘    └─────────┘
```

## Figur 3

400
401
402
403

404        405        406        407        408        409

## Figur 4

Figur 5

Europäisches
Patentamt

European
Patent Office

Office européen
des brevets

# EUROPÄISCHER RECHERCHENBERICHT

**Nummer der Anmeldung**

EP 24 18 8036

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PROHINIG JENNIFER M. ET AL: "The role of SiO2 in semiconducting BaTiO3-based ceramics: Extension of the Jonker model and effect on the electrical properties", OPEN CERAMICS, Bd. 7, 1. September 2021 (2021-09-01), Seite 100138, XP093223901, ISSN: 2666-5395, DOI: 10.1016/j.oceram.2021.100138 | 1-5,7-10 | INV.<br>C04B35/468<br>C04B35/626<br>C04B35/634<br>C04B35/64<br>C04B35/472 |
| A | * "Abstract"; "1. Introduction"; "2. Materials and Methods"; Abbildungen 7 und 9; Tabelle 4 * | 6 | |
| | ----- | | |
| X | CN 101 402 524 A (CHANGSHU TONGFU ELECTRONIC CO [CN]) 8. April 2009 (2009-04-08) | 1-4,7,9, 10 | |
| A | * Abbildung 1; Beispiele 4, 5 * | 5,6,8 | |
| | ----- | | |
| X | JP S56 40202 A (MATSUSHITA ELECTRIC IND CO LTD) 16. April 1981 (1981-04-16) | 1-4,7,9, 10 | |
| A | * Proben 104-107 in Tabelle auf Seite 10 * | 5,6,8 | **RECHERCHIERTE SACHGEBIETE (IPC)** |
| | ----- | | |
| X | CN 107 056 279 A (SHANWEI BYD IND CO LTD) 18. August 2017 (2017-08-18) | 1-4,7,9, 10 | C04B |
| A | * Vergleichsbeispiele 1 und 2 * | 5,6,8 | |
| | ----- | | |

Der vorliegende Recherchenbericht wurde für alle Patentansprüche erstellt

| Recherchenort | Abschlußdatum der Recherche | Prüfer |
|---|---|---|
| München | 14. November 2024 | Munro, Brian |

**ANHANG ZUM EUROPÄISCHEN RECHERCHENBERICHT
ÜBER DIE EUROPÄISCHE PATENTANMELDUNG NR.**

EP 24 18 8036

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2024

| Im Recherchenbericht angeführtes Patentdokument | Datum der Veröffentlichung | Mitglied(er) der Patentfamilie | Datum der Veröffentlichung |
|---|---|---|---|
| CN 101402524 A | 08-04-2009 | KEINE | |
| JP S5640202 A | 16-04-1981 | JP S5640202 A<br>JP S5919441 B2 | 16-04-1981<br>07-05-1984 |
| CN 107056279 A | 18-08-2017 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102014110164 A1